# EUROPEAN PATENT SPECIFICATION

(11) **EP 4 361 230 B1**
(45) Date of publication and mention of the grant of the patent: **22.04.2026**
(21) Application number: 22828073.1
(22) Date of filing: 28.04.2022
(51) Int. Cl.: C09J 11/06, C09J 11/08, C09J 163/00

(54) **ADHESIVE COMPOSITION FOR LAMINATING ELECTRICAL STEEL SHEET**
KLEBSTOFFZUSAMMENSETZUNG ZUM LAMINIEREN VON ELEKTROSTAHLBLECHEN
COMPOSITION ADHÉSIVE POUR LA STRATIFICATION D'UNE TÔLE D'ACIER ÉLECTRIQUE

(30) Priority: 21.06.2021 JP 2021102360
(43) Date of publication of application: 01.05.2024
(73) Proprietor: Sika Japan Ltd., Tokyo, 107-0051 (JP); NIPPON STEEL CORPORATION, Chiyoda-ku Tokyo 100-8071 (JP)
(72) Inventor: ISHIKAWA Kazunori, Hiratsuka City, Kanagawa 2540014 (JP); ITO Tsubasa, Hiratsuka City, Kanagawa 2540014 (JP); ARAMAKI Takashi, Tokyo 100-8071 (JP); OISHI Hiroshi, Tokyo 100-8071 (JP)
(74) Representative: TBK
(86) International application number: PCT/JP2022/019251
(87) International publication number: WO 2022/270154

(56) References cited:
- WO-A1-2017/094789
- JP-A- 2009 517 498
- JP-A- 2014 096 429
- JP-A- 2016 039 042
- JP-A- S48 100 602
- US-A1- 2008 131 639

## Description

### TECHNICAL FIELD

The present invention relates to an adhesive composition for laminating an electromagnetic steel sheet.

### BACKGROUND ART

In a stator or a rotor of an electric motor, a generator, a transformer, and the like, for example, a laminated core is conventionally used. In the laminated core, a plurality of electromagnetic steel sheets is generally bonded and laminated with an adhesive composition.

Regarding a laminated core, for example, Patent Document 1 discloses that an adhesive layer of a laminated electromagnetic steel sheet is composed of an organic resin (for example, an epoxy resin) having a glass transition temperature or a softening temperature of 50°C to 150°C.

Patent Document 2 relates to an annular laminated core material and a method for manufacturing an annular laminated core material, and discloses that when a laminated sheet of aramid paper, which is used as an insulating sheet against the laminated core material, is manufactured, a resin composition composed of an epoxy group-containing phenoxy resin and a polyamide resin is used as an adhesive.

Patent Document 3 relates to a method for manufacturing an adhesion type laminated core in which a plurality of iron core thin plates laminated is bonded with an adhesive, and the like, and discloses that as one index showing heat resistance of an adhesive, a tensile strength of the laminated core after held at 300°C for 1 hour in a nitrogen atmosphere is preferably equal to or more than 30 MPa.

Patent Document 4 relates to a laminated core that is used for a rotor of a motor, a stator of a motor, a transformer, or the like, and a method for manufacturing the same, and discloses a non-oriented electromagnetic steel sheet composition including a first composition, which contains a water-soluble epoxy resin and an inorganic nanoparticle that is SiO₂, TiO₂, ZnO, or a combination thereof, and an inorganic additive, which is phosphoric acid (H₃PO₄), sodium hydroxide (NaOH), or a combination thereof, wherein the inorganic nanoparticle is substituted by a terminal substituent of the water-soluble epoxy resin, and the epoxy resin is a polyfunctional epoxy resin having equal to or more than 3 epoxy groups. Patent Document 5 relates to an adhesive for an electromagnetic steel sheet comprising a thermoplastic epoxy resin, a melamine resin, a polyurethane resin, a silicon resin and a polyimide resin.

### CITATION LIST

### PATENT DOCUMENTS

Patent Document 1: Japanese Patent Laid-Open No. 2002-146492
Patent Document 2: Japanese Patent Laid-Open No. 2020-171171
Patent Document 3: Japanese Patent Laid-Open No. 2004-42345
Patent Document 4: Japanese Translation of PCT International Application Publication No. 2016-540901
Patent Document 5: JP S48 100602 A

### SUMMARY OF THE INVENTION

### PROBLEM TO BE SOLVED BY THE INVENTION

In order that a laminated core may exhibit high performance under the service conditions, a cured product (adhesive cured product) obtained from an adhesive composition for a laminated electromagnetic steel sheet is required to have excellent toughness, as shown in Patent Document 3. Particularly in recent years, regarding toughness of an adhesive cured product, the adhesive cured product is required to have a high yield stress over a wide temperature range including high temperatures (for example, equal to or higher than 120°C). Specifically, for example, a yield stress as measured under the conditions of 25°C is required to be equal to or more than 60 MPa, and a yield stress as measured under the conditions of 140°C is required to be equal to or more than 20 MPa.

However, obtaining an adhesive cured product having such excellent toughness as above from the conventional adhesive composition is extremely difficult.

Next, when an electromagnetic steel sheet to which an adhesive composition has been applied is used in the manufacture of a laminated core, the adhesive is required to be free of tack.

Regarding an electromagnetic steel sheet to which an adhesive composition has been generally applied, first, an adhesive composition is applied onto a surface of the electromagnetic steel sheet and dried, and thereafter, the electromagnetic steel sheet is transported or stored in a state where the electromagnetic steel sheets are superposed upon each other (for example, a state where the electromagnetic steel sheet is rolled up). If the adhesive has tack in the above state, the adhesive adheres to another electromagnetic steel sheet during transportation or storage, and when the rolled electromagnetic steel sheet is unrolled in order to use the steel sheet, the adhesive sometimes peels off from the electromagnetic steel sheet to which the adhesive is supposed to adhere. Besides, in a punching step, the adhesive composition on the electromagnetic steel sheet sometimes adheres to a punching apparatus or the like.

On this account, when the electromagnetic steel sheet is simply laminated (before the electromagnetic steel sheet is finally bonded to form a laminated electromagnetic steel sheet), the adhesive composition that has been applied to the electromagnetic steel sheet needs to have excellent tack-free properties.

Moreover, even if the electromagnetic steel sheet to which an adhesive composition has been applied is stored for a long time, the adhesive composition for laminating an electromagnetic steel sheet is required not to be decreased in adhesive performance of the adhesive composition (to be excellent in adhesive performance after long-term storage).

In the above circumstances, the present inventors have evaluated a cured product obtained from a composition containing an epoxy resin such as bisphenol A type and a common phenoxy resin, referring to Patent Documents 1 and 2. As a result, it has been found that the glass transition temperature (heat resistance) of such a cured product as described above does not increase, and hence tack-free properties of the adhesive composition after applied, toughness of the adhesive cured product at high temperatures, and maintenance of adhesive performance after long-term storage are insufficient.

Besides, it has been found that even if the above-mentioned phenoxy resin and epoxy resin are changed and Tg (heat resistance) of the resulting adhesive cured product is just increased, the yield stress (toughness) of such a cured product as above does not increase, and hence tack-free properties of the adhesive composition after applied are not improved either (Comparative Example 1).

Next, the above-mentioned epoxy resin has been changed to an epoxy resin having a softening temperature of 50°C to 150°C and/or an equal to or higher than tri-functional epoxy resin. As a result, it has been found that Tg (heat resistance) of the resulting adhesive cured product increases, and the yield stress at room temperature increases, but with that alone, toughness of the adhesive cured product under the high temperature conditions and maintenance of adhesive performance after long-term storage are insufficient (Comparative Examples 3 and 5).

Therefore, it is an object of the present application to provide an adhesive composition for laminating an electromagnetic steel sheet, which has excellent tack-free properties before preparation of a laminated electromagnetic steel sheet, has excellent adhesive performance even after long-term storage, and provides an adhesive cured product having excellent toughness over a wide temperature range.

### MEANS FOR SOLVING THE PROBLEM

In order to solve the above problem, the present inventors have earnestly studied. As a result, they have found that the desired effect is obtained by an adhesive composition including an equal to or higher than tri-functional epoxy resin (A), a phenoxy resin (B) having a glass transition temperature exceeding 120°C in an uncured state, and an amine-based latent curing agent (C), wherein the epoxy resin (A) contains an epoxy resin having a softening temperature equal to or higher than 60°C, a content of the phenoxy resin (B) is a specific amount, and a glass transition temperature of the resulting adhesive cured product exceeds 160°C, and they have arrived at the present invention.
[1] An adhesive composition for laminating an electromagnetic steel sheet, including:
   an epoxy resin (AA) containing an epoxy resin (A) having equal to or more than 3 epoxy groups in one molecule,
   a phenoxy resin (B) having a glass transition temperature exceeding 120°C in an uncured state in differential scanning calorimetry, and
   an amine-based latent curing agent (C), wherein:
      the epoxy resin (A) contains an epoxy resin having a softening temperature equal to or higher than 60°C,
      a content of the phenoxy resin (B) is 20 to 80 parts by mass based on 100 parts by mass of the epoxy resin (AA), and
      a glass transition temperature of the resulting adhesive cured product in differential scanning calorimetry exceeds 160°C.
[2] The adhesive composition for laminating an electromagnetic steel sheet according to [1], wherein the phenoxy resin (B) contains at least one selected from the group consisting of a phosphorus-containing phenoxy resin (B1), a fluorene-containing phenoxy resin (B2), and a bisphenol S skeleton-containing phenoxy resin (B3).
[3] The adhesive composition for laminating an electromagnetic steel sheet according to [1] or [2], wherein the epoxy resin having a softening temperature equal to or higher than 60°C contains a phenol novolac type epoxy resin (A1) and/or a cresol novolac type epoxy resin (A2).
[4] The adhesive composition for laminating an electromagnetic steel sheet according to any one of [1] to [3], wherein a content of the epoxy resin having a softening temperature equal to or higher than 60°C is equal to or more than 50% by mass in the whole amount of the epoxy resin (AA).
[5] The adhesive composition for laminating an electromagnetic steel sheet according to any one of [1] to [4], wherein the epoxy resin (A) further contains an epoxy resin having an N,N-diglycidylamino group, and a content of the epoxy resin having an N,N-diglycidylamino group is equal to or less than 50% by mass in the whole amount of the epoxy resin (AA).
[6] The adhesive composition for laminating an electromagnetic steel sheet according to [5], wherein the epoxy resin having an N,N-diglycidylamino group contains an epoxy resin (A3) represented by the formula (1) described later and/or an epoxy resin (A4) represented by the formula (2) described later.
[7] The adhesive composition for laminating an electromagnetic steel sheet according to any one of [1] to [6], wherein a content of the amine-based latent curing agent (C) is 5 to 70 parts by mass based on 100 parts by mass of the epoxy resin (AA).
[8] The adhesive composition for laminating an electromagnetic steel sheet according to any one of [1] to [7], further including a toughening agent (D).
[9] The adhesive composition for laminating an electromagnetic steel sheet according to [8], wherein the toughening agent (D) has an average particle diameter of 0.005 to 0.6 µm, and contains a core-shell type toughening agent (D1).
[10] The adhesive composition for laminating an electromagnetic steel sheet according to [8] or [9], wherein a content of the toughening agent (D) is 1 to 30 parts by mass based on 100 parts by mass of the epoxy resin (AA).
[11] The adhesive composition for laminating an electromagnetic steel sheet according to any one of [1] to [10], wherein a content of a bifunctional epoxy resin is 0 to 40% by mass in the epoxy resin (AA).
[12] The adhesive composition for laminating an electromagnetic steel sheet according to any one of [1] to [11], wherein the adhesive cured product has a yield stress equal to or more than 60 MPa, as measured under the conditions of 25°C in accordance with JIS K 7161, and has a yield stress equal to or more than 20 MPa, as measured under the conditions of 140°C in accordance with JIS K 7161.

### EFFECT OF THE INVENTION

The adhesive composition for laminating an electromagnetic steel sheet according to the present invention has excellent tack-free properties from application to an electromagnetic steel sheet until manufacturing of an iron core (a laminated core), is excellent in adhesive performance even after it is stored for a long period of time before the above manufacturing, and provides an adhesive cured product having excellent toughness over a wide temperature range.

The iron core formed of the adhesive composition for laminating an electromagnetic steel sheet according to the present invention has excellent adhesive performance and is excellent in toughness over a wide temperature range.

### DESCRIPTION OF EMBODIMENTS

Hereinafter, embodiments of the present invention will be described in detail. However, the description of the constituent features given below is one example of an embodiment of the present invention.

In the present specification, the expression "to" in relation to numerical range is used as an expression including numerical values before and after it.

The method for manufacturing each component described in the present specification is not particularly restricted unless otherwise noted. For example, a conventionally known method can be mentioned.

Regarding the adhesive composition for laminating an electromagnetic steel sheet according to the present invention, a case where at least one of the tack-free properties, the adhesive performance, and the toughness is superior is sometimes represented by the expression "the effect of the present invention is superior" in the present specification. Regarding an iron core formed of the adhesive composition for laminating an electromagnetic steel sheet according to the present invention, the same shall apply to the case where at least one of the adhesive performance and the toughness is superior.

### [Adhesive composition for laminating electromagnetic steel sheet]

The adhesive composition for laminating an electromagnetic steel sheet according to the present invention (the composition of the present invention) is an adhesive composition for laminating an electromagnetic steel sheet, including:
an epoxy resin (AA) containing an epoxy resin (A) having equal to or more than 3 epoxy groups in one molecule,
a phenoxy resin (B) having a glass transition temperature exceeding 120°C in an uncured state in differential scanning calorimetry (DSC measurement), and
an amine-based latent curing agent (C), wherein:
   the epoxy resin (A) contains an epoxy resin having a softening temperature equal to or higher than 60°C,
   a content of the phenoxy resin (B) is 20 to 80 parts by mass based on 100 parts by mass of the epoxy resin (AA), and
   Tg of the resulting adhesive cured product in differential scanning calorimetry exceeds 160°C.

It has been found that since the composition of the present invention includes not only an epoxy resin having a softening temperature equal to or higher than 60°C but also a phenoxy resin (B) having an excellent cohesive force, that is, having Tg exceeding 120°C, the resulting adhesive cured product can develop not only a yield stress under the conditions of 25°C but also an excellent yield stress over a wide temperature range including high temperatures. The above matter is thought to be the greatest feature of the composition of the present invention.

Hereinafter, the components contained in the composition of the present invention will be described in detail.

### <<Epoxy resin (AA)>>

The composition of the present invention includes an epoxy resin (AA). The epoxy resin (AA) is a compound having a plurality of epoxy groups.

The composition of the present invention can maintain high adhesion reliability for an electromagnetic steel sheet by including the epoxy resin (AA) .

In the present invention, the epoxy resin (AA) does not contain a phenoxy resin (B) described later, and does not contain a toughening agent (D) described later.

### ·Epoxy equivalent of epoxy resin (AA)

An epoxy equivalent of the epoxy resin (AA) is preferably equal to or less than 1000 g/eq, more preferably 100 to 500 g/eq, from the viewpoint that the effect of the present invention is superior.

In the present invention, the epoxy equivalent of the epoxy resin can be measured by adding a brominated tetraethylammonium acetate solution and performing titration with a 0.1 mol/L perchloric acid-acetic acid solution using an automatic potentiometric titrator (manufactured by Hiranuma Sangyo Co., Ltd., COM-1600ST) and using chloroform as a solvent in accordance with JIS K 7236.

### ·Molecular weight of epoxy resin (AA)

Molecular weight of the epoxy resin (AA) is preferably equal to or more than 100 and less than 5000 from the viewpoint that the effect of the present invention is superior.

The molecular weight of the epoxy resin (AA) can be calculated from the epoxy equivalent and the number of epoxy groups of the epoxy resin (AA).

### <Epoxy resin (A)>

The epoxy resin (AA) contains an epoxy resin (A) having equal to or more than 3 epoxy groups in one molecule.

The number of epoxy groups present in one molecule in the epoxy resin (A) can be equal to or less than 20, and from the viewpoint that the effect of the present invention is superior, the number thereof is preferably 3 to 12.

### ·Content of epoxy resin (A)

From the viewpoint that the effect of the present invention is superior, a content of the epoxy resin (A) is preferably equal to or more than 50% by mass, more preferably equal to or more than 70% by mass, still more preferably equal to or more than 90% by mass, in the epoxy resin (AA). If the content is less than 50% by mass, Tg of the cured product cannot be sufficiently increased, and a heat resistance issue remains.

### <Epoxy resin having softening temperature equal to or higher than 60°C>

In the composition of the present invention, the epoxy resin (A) contains an epoxy resin having a softening temperature equal to or higher than 60°C.

The composition of the present invention is excellent in the tack-free properties, the adhesive performance, and the toughness by containing the epoxy resin having a softening temperature equal to or higher than 60°C.

The epoxy resin having a softening temperature equal to or higher than 60°C has equal to or more than 3 epoxy groups in one molecule because it belongs to the epoxy resin (A). The epoxy resin having a softening temperature equal to or higher than 60°C is sometimes referred to as "a solid epoxy resin".

### ·Softening temperature

In the present invention, the softening temperature of the solid epoxy resin is equal to or higher than 60°C, and from the viewpoint that the effect of the present invention is superior, it is preferably 60 to 110°C. If it is higher than 110°C, coating properties of the adhesive to a steel sheet are deteriorated, and adhesive force is sometimes lowered. From the viewpoint that the effect of the present invention is superior, the solid epoxy resin preferably contains an epoxy resin having a softening temperature of 60 to 80°C and/or an epoxy resin having a softening temperature higher than 80°C and equal to or lower than 110°C.

In the present invention, the softening temperature of the epoxy resin can be determined in accordance with JIS K 7206:2016.

From the viewpoint that the effect of the present invention is superior, the solid epoxy resin preferably contains a phenol novolac type epoxy resin (A1) and/or a cresol novolac type epoxy resin (A2), and more preferably contains the epoxy resin (A1) and the epoxy resin (A2).

### ·Phenol novolac type epoxy resin (A1)

The phenol novolac type epoxy resin generally refers to a reaction product of a phenol novolac resin and epichlorohydrin. The phenol novolac type epoxy resin (A1) is, for example, a compound represented by the following formula (6).

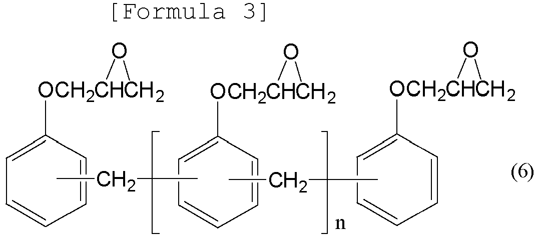

In the formula (6), n is equal to or more than 1, and can be equal to or less than 18. The above n is preferably 1 to 10 from the viewpoint that the effect of the present invention is superior.

### ·Cresol novolac type epoxy resin (A2)

The cresol novolac type epoxy resin generally refers to a reaction product of a cresol novolac resin and epichlorohydrin. The cresol novolac type epoxy resin (A2) is, for example, a reaction product of a cresol novolac resin and epichlorohydrin, which is represented by the following formula (7).

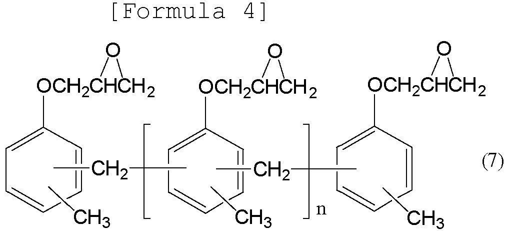

In the formula (7), n is equal to or more than 1, and can be equal to or less than 18. The above n is preferably 1 to 10 from the viewpoint that the effect of the present invention is superior.

### ·Content of solid epoxy resin

From the viewpoint that the effect of the present invention is superior (particularly, tack-free properties are superior, and electromagnetic steel sheets are hard to adhere closely to each other), a content of the solid epoxy resin (when the solid epoxy resin contains the epoxy resin (A1) and the epoxy resin (A2), the content refers to the total content of these) is preferably equal or more than 50% by mass, more preferably equal to or more than 60% by mass, still more preferably equal to or more than 70% by mass, in the whole amount of the epoxy resin (AA). If the content is less than 50% by mass, sufficient tack-free properties are not obtained, and steel sheets sometimes adhere closely to each other during storage.

### ·Epoxy resin having nitrogen atom

From the viewpoint that the effect of the present invention is superior, the epoxy resin (A) preferably further contains an epoxy resin having a nitrogen atom (also referred to as a nitrogen-containing epoxy resin), and more preferably contains an epoxy resin having an N,N-diglycidylamino group (following structure).

The nitrogen-containing epoxy resin does not contain an epoxy resin having a softening temperature equal to or higher than 60°C.

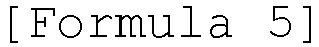

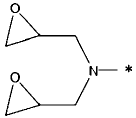

In the above structural formula, * represents a bonding position.

The epoxy resin having an N,N-diglycidylamino group (also referred to as a glycidylamino group-containing epoxy resin) preferably has 1 to 2 N,N-diglycidylamino groups in one molecule.

The glycidylamino group-containing epoxy resin may further have an epoxy group other than the N,N-diglycidylamino group (an epoxy group such as a glycidyl group or a glycidyloxy group).

When the glycidylamino group-containing epoxy resin has one N,N-diglycidylamino group in one molecule, it may further have an epoxy group other than the N,N-diglycidylamino group.

In the nitrogen-containing epoxy resin, a group having an epoxy group such as an N,N-diglycidylamino group can be bonded to an equal to or higher than divalent linking group. The linking group is not particularly restricted. For example, a hydrocarbon group can be mentioned, and a hydrocarbon group having an aromatic hydrocarbon group is preferable.

### ·Epoxy resin (A3), (A4)

From the viewpoint that the effect of the present invention is superior, the glycidylamino group-containing epoxy resin preferably contains an epoxy resin (A3) represented by the following formula (1) and/or an epoxy resin (A4) represented by the following formula (2), and more preferably contains at least the epoxy resin (A4). When the glycidylamino group-containing epoxy resin contains the epoxy resin (A4), it may further contain the epoxy resin (A3).

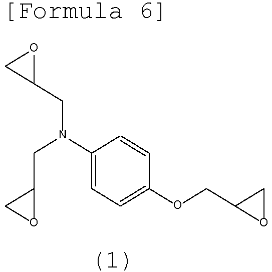

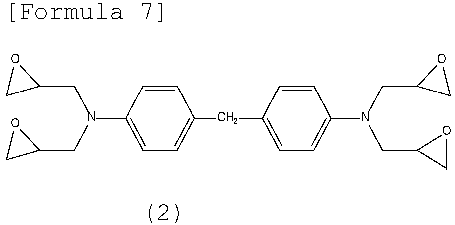

The nitrogen-containing epoxy resin is preferably liquid under the conditions of room temperature (25°C).

The nitrogen-containing epoxy resin has equal to or more than 3 epoxy groups in one molecule because it belongs to the epoxy resin (A).

### ·Content of epoxy resin having nitrogen atom

A content of the nitrogen-containing epoxy resin (when the nitrogen-containing epoxy resin contains the epoxy resin (A3) and the epoxy resin (A4), the content refers to the total content of these) is preferably equal or less than 50% by mass, more preferably 10 to 40% by mass, still more preferably 20 to 30% by mass, in the whole amount of the epoxy resin (AA).

From the viewpoint that the effect of the present invention is superior, a content of the epoxy resin (A4) is preferably 10 to 40% by mass of the whole amount of the epoxy resin (AA). If the content thereof is less than 10% by mass, sufficient heat resistance is not obtained, and if the content thereof is more than 40% by mass, sufficient tack-free properties are sometimes not obtained.

From the viewpoint that the effect of the present invention is superior, a content of the epoxy resin (A3) is preferably 0 to 20% by mass of the whole amount of the epoxy resin (AA).

### ·Epoxy resin other than epoxy resin (A)

The epoxy resin (AA) may further contain an epoxy resin other than the epoxy resin (A) having equal to or more than 3 epoxy groups in one molecule (another epoxy compound).

Examples of the above-mentioned another epoxy compound include a monofunctional epoxy compound having one epoxy group in one molecule and a bifunctional epoxy resin (an epoxy resin having 2 epoxy groups in one molecule).

Examples of the bifunctional epoxy resin include bisphenol type epoxy resins, such as a bisphenol A type epoxy resin, a bisphenol F type epoxy resin, a brominated bisphenol A type epoxy resin, a hydrogenated bisphenol A type epoxy resin, a bisphenol S type epoxy resin, and a bisphenol AF type epoxy resin; and epoxy resins having a bisphenyl group, such as a biphenyl type epoxy resin.

When the composition of the present invention further contains another epoxy compound, it preferably contains a bifunctional epoxy resin, and more preferably contains a bisphenol A type epoxy resin.

### ·Content of another epoxy compound

From the viewpoint that the effect of the present invention is superior (particularly tack-free properties), a content of another epoxy compound is preferably 0 to 40% by mass, more preferably 0 to 10% by mass, in the epoxy resin (AA).

### <<Phenoxy resin (B)>>

The composition of the present invention includes a phenoxy resin (B) having Tg exceeding 120°C in an uncured state in differential scanning calorimetry (DSC measurement).

The composition of the present invention is excellent in the tack-free properties, the adhesive performance, and the toughness by containing the phenoxy resin (B).

A resin obtained by polymerizing a low-molecular weight epoxy compound is conventionally referred to as a phenoxy resin, and the phenoxy resin (B) does not contain the epoxy resin (AA). Besides, the phenoxy resin (B) does not contain a toughening agent (D) described later.

### ·Specific examples of phenoxy resin (B)

Examples of the phenoxy resin (B) include a phosphorus-containing phenoxy resin (B1), a fluorene-containing phenoxy resin (B2), a phenoxy resin having a bisphenol skeleton, a phenoxy resin having a novolac skeleton, a phenoxy resin having a naphthalene skeleton, and a phenoxy resin having a biphenyl skeleton.

Among these, the phenoxy resin (B) preferably contains at least one selected from the group consisting of a phosphorus-containing phenoxy resin (B1), a fluorene-containing phenoxy resin (B2), and a bisphenol S skeleton-containing phenoxy resin (B3) from the viewpoint that the effect of the present invention (particularly toughness) is superior, and more preferably contains a bisphenol S skeleton-containing phenoxy resin (B3) from the viewpoint that heat resistance and adhesive properties to an electromagnetic steel sheet are excellent in addition to the above viewpoint.

### <Phosphorus-containing phenoxy resin (B1)>

The phosphorus-containing phenoxy resin (B1) is a phenoxy resin having phosphorus.

From the viewpoint that the effect of the present invention is superior, the phosphorus-containing phenoxy resin (B1) preferably has a skeleton represented by the following formula (B1-1).

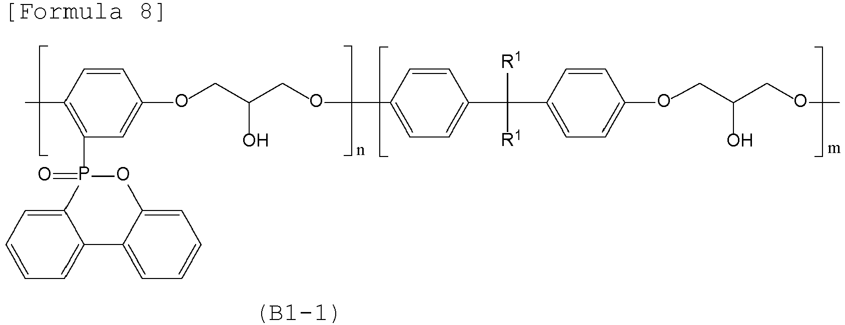

In the formula (B1-1), R¹ each independently represents a hydrogen atom or a methyl group, m and n are each independently equal to or more than 1, and m+n can be a value corresponding to a weight-average molecular weight of the phenoxy resin (B) described later.

### <Fluorene-containing phenoxy resin (B2)>

The fluorene-containing phenoxy resin (B2) is a phenoxy resin having fluorene.

From the viewpoint that the effect of the present invention is superior, the fluorene-containing phenoxy resin (B2) preferably has a skeleton represented by the following formula (B2-1).

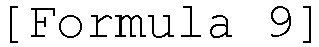

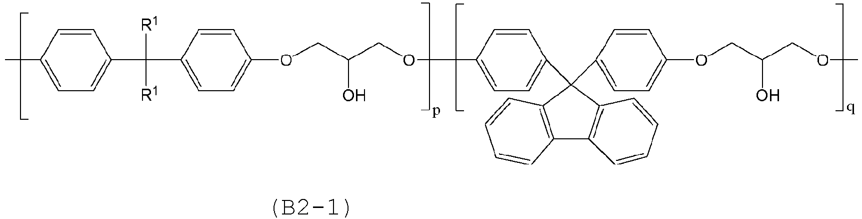

In the formula (B2-1), R¹ each independently represents a hydrogen atom or a methyl group, p and q are each independently equal to or more than 1, and p+q can be a value corresponding to a weight-average molecular weight of the phenoxy resin (B) described later.

### <Bisphenol S skeleton-containing phenoxy resin (B3)>

The bisphenol S skeleton-containing phenoxy resin (B3) is a phenoxy resin having a bisphenol S skeleton.

From the viewpoint that the effect of the present invention is superior, the bisphenol S skeleton-containing phenoxy resin (B3) preferably has a skeleton represented by the following formula (B3-1).

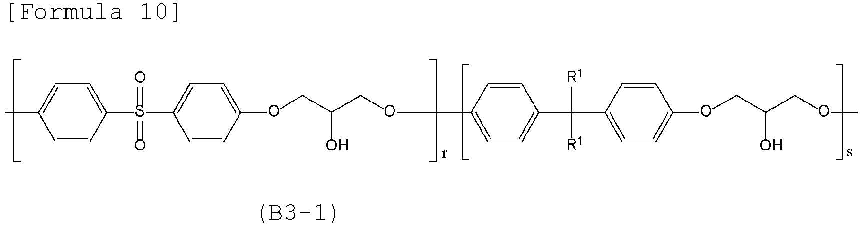

In the formula (B3-1), R¹ each independently represents a hydrogen atom or a methyl group, r and s are each independently equal to or more than 1, and r+s can be a value corresponding to a weight-average molecular weight of the phenoxy resin (B) described later.

In the formula (B1-1), the formula (B2-1), and the formula (B3-1), an end of each structural formula is not particularly restricted. For example, an epoxy group or a hydrogen atom can be bonded to the end. When an epoxy group is bonded to the end, the end and the epoxy group can be bonded through a linking group. The linking group is not particularly restricted.

### <Glass transition temperature of phenoxy resin (B) >

In the composition of the present invention, a glass transition temperature (Tg) of the phenoxy resin (B) in an uncured state in differential scanning calorimetry (DSC measurement) exceeds 120°C.

The "phenoxy resin (B) in an uncured state" refers to a phenoxy resin (B) in a state before it is added to the composition of the present invention.

When the Tg of the phenoxy resin (B) to be contained in the composition of the present invention is within the above range, an adhesive cured product obtained from the composition of the present invention is excellent in the toughness and the adhesive performance.

Regarding the glass transition temperature of the phenoxy resin (B), a DSC curve in a temperature range of 50°C to 370°C was measured by increasing the temperature up to 370°C at a temperature increase rate of 15°C/min using a differential scanning calorimeter DSC-50 manufactured by SHIMADZU CORPORATION. A temperature at the first inflection point of the DSC curve was regarded as a glass transition temperature of the phenoxy resin (B).

When the phenoxy resin (B) has an epoxy group, the epoxy equivalent of the phenoxy resin (B) is preferably equal to or more than 5000 g/eq from the viewpoint that the effect of the present invention is superior. Intermolecular chemical bonding of epoxy resin (A)/phenoxy resin (B) takes place, and even if phase separation occurs in the cured resin, interfacial strength is ensured, thereby easily maintaining toughness.

The phenoxy resin (B) may not have an epoxy group.

### ·Weight-average molecular weight of phenoxy resin (B)

From the viewpoint that the effect of the present invention is superior, a weight-average molecular weight of the phenoxy resin (B) is preferably 30,000 to 500,000, more preferably 35,000 to 100,000. In the case of less than 30,000, sufficient toughness is not obtained, and in the case of more than 500,000, viscosity of an adhesive liquid increases, sometimes resulting in difficulty in uniform coating of a steel sheet.

In the present invention, the weight-average molecular weight (Mw) of the phenoxy resin can be a standard polystyrene conversion value measured by gel permeation chromatography (GPC method) using tetrahydrofuran as a solvent.

The weight-average molecular weight (Mw) of the phenoxy resin may be a catalog value.

### <Content of phenoxy resin (B)>

In the composition of the present invention, a content of the phenoxy resin (B) is 20 to 80 parts by mass based on the whole amount 100 parts by mass of the epoxy resin (AA). If the content of the phenoxy resin (B) is less than 20 parts by mass, toughness of the resulting adhesive cured product sometimes becomes insufficient. If the content of the phenoxy resin (B) exceeds 80 parts by mass, Tg of the resulting adhesive cured product cannot exceed 160°C.

### <Amine-based latent curing agent (C)>

The composition of the present invention includes an amine-based latent curing agent (C).

For curing an epoxy resin, several methods are known. An acid anhydride and a phenol-based curing agent improve adhesive strength but exhibit a slow curing rate, so that they are not suitable for the present invention. A usual polyamine curing agent causes too rapid curing, so that it is not suitable for the present invention.

Since the composition of the present invention includes the amine-based latent curing agent (C), the effect of the present invention (particularly adhesive performance after long-term storage) is excellent.

In the present invention, a latent curing agent means a curing agent capable of initiating reaction by heating or the like. Differently from a usual curing agent that undergoes reaction at room temperature (25°C or the like), the latent curing agent does not undergo reaction at room temperature, or even if it undergoes reaction, the reaction is very slight.

The amine-based latent curing agent (C) has a nitrogen atom, and can function as a curing agent for the epoxy resin (AA) and/or the phenoxy resin (B). In the present invention, the phenoxy resin (B) does not have an epoxy group, or even if it has an epoxy group, Mw of the phenoxy resin (B) is higher than that of the epoxy resin (AA). Hence, it is thought that the greater part of the amine-based latent curing agent (C) reacts with the epoxy resin (AA).

### ·Specific examples of amine-based latent curing agent (C)

Examples of the amine-based latent curing agent (C) include dicyandiamide, modified polyamine, hydrazides, 4,4'-diaminodiphenyl sulfone (DDS), ureas such as DCMU: 3-(3,4-dichlorophenyl)-1,1-dimethylurea, an imidazole-based compound such as 2-ethyl-4-methylimidazole, and melamine. These may be used singly, or may be used in combination of two or more.

From the viewpoint that the effect of the present invention is superior, the amine-based latent curing agent (C) preferably contains at least one selected from the group consisting of dicyandiamide, ureas, 4,4'-diaminodiphenyl sulfone, and an imidazole-based compound,
more preferably contains a combination of dicyandiamide and ureas and/or an imidazole-based compound, or 4,4'-diaminodiphenyl sulfone (4,4'-diaminodiphenyl sulfone may be used singly), and
still more preferably is a combination of dicyandiamide and 3-(3,4-dichlorophenyl)-1,1-dimethylurea, or 4,4'-diaminodiphenyl sulfone.

### ·Content of amine-based latent curing agent (C)

From the viewpoint that the effect of the present invention is superior, a content of the amine-based latent curing agent (C) (when the amine-based latent curing agent (C) contains a plurality of amine-based latent curing agents (C), the content refers to the total content of the plurality of amine-based latent curing agents (C)) is preferably 5 to 70 parts by mass based on 100 parts by mass of the epoxy resin (AA).

When the amine-based latent curing agent (C) contains dicyandiamide and ureas, the total content of the amine-based latent curing agents (C) is preferably 5 to 20 parts by mass based on 100 parts by mass of the epoxy resin (AA).

When the amine-based latent curing agent (C) contains 4,4'-diaminodiphenyl sulfone, a content of the amine-based latent curing agent (C) is preferably 25 to 50 parts by mass based on 100 parts by mass of the epoxy resin (AA).

### ·Toughening agent (D)

The composition of the present invention preferably further includes a toughening agent (D) from the viewpoint that the toughness of the resulting adhesive cured product is superior.

The toughening agent (D) refers to a compound capable of further imparting toughness to the resulting adhesive cured product.

The toughening agent (D) is preferably composed of a polymer having flexibility.

Examples of the toughening agent (D) include core-shell type, a rubber-modified epoxy resin, and a urethane-modified epoxy resin.

The toughening agent (D) is not contained in any of the epoxy resin (AA), the phenoxy resin (B), and the amine-based latent curing agent (C).

The toughening agent (D) may or may not react with the amine-based latent curing agent (C), the epoxy resin (AA), or the phenoxy resin (B).

From the viewpoint that the effect of the present invention (particularly toughness) is superior, the toughening agent (D) preferably contains at least one selected from the group consisting of core-shell type, a rubber-modified epoxy resin, and a urethane-modified epoxy resin; more preferably contains a core-shell type toughening agent; and still more preferably contains a core-shell type toughening agent (D1) and having an average particle diameter of 0.05 to 0.2 µm.

### ·Core-shell type toughening agent

In one preferred embodiment, the core-shell type toughening agent is particulate.

The core-shell type toughening agent has a core layer and a shell layer.

Examples of the core-shell type toughening agent include a rubber particle of two-layer structure composed of a glassy polymer as a shell layer of an outer layer and a rubbery polymer as a core layer of an inner layer, and a rubber particle of three-layer structure composed of a glassy polymer as a shell layer of an outer layer, a rubbery polymer as an intermediate layer, and a glassy polymer as a core layer. The glassy polymer is composed of, for example, a polymer of methyl (meth)acrylate and/or a polymer of styrene. The rubbery polymer is composed of, for example, a butyl acrylate polymer (butyl rubber), silicone rubber, or polybutadiene.

### ·Average particle diameter of toughening agent (D)

From the viewpoint that the toughness of the resulting adhesive cured product is superior and the viewpoint that Tg is not lowered, an average particle diameter of the toughening agent (D) is preferably equal to or more than 0.005 µm and equal to or less than 0.6 µm, more preferably equal to or more than 0.05 µm and equal to or less than 0.2 µm. In the case of less than 0.005 µm, dispersion of the particles in the epoxy resin is deteriorated, and in the case of more than 0.6 µm, heat resistance is sometimes deteriorated.

The average particle diameter of the toughening agent (D) refers to a particle diameter at a cumulative value of 50% (50% volume cumulative diameter), which is determined by measuring particle size distribution on the volume basis using a laser diffraction particle size distribution measuring device. The laser diffraction particle size distribution measuring device is, for example, a laser diffraction light scattering type particle size distribution measuring device "Microtrac MT3000 II Series" manufactured by MicrotracBEL Corp.

The matters regarding the core-shell type toughening agent and the average particle diameter of the toughening agent (D) are the same as those regarding the core-shell type toughening agent (D1).

### ·Rubber-modified epoxy resin

The rubber-modified epoxy resin is an epoxy resin which has equal to or more than 2 epoxy groups and a skeleton of which is a rubber.

Examples of the rubber that forms the skeleton include polybutadiene and acrylonitrile butadiene rubber (NBR) .

From the viewpoint that the effect of the present invention is superior, an epoxy equivalent of the rubber-modified epoxy resin is preferably equal to or more than 200 g/eq and equal to or less than 500 g/eq.

### ·Urethane-modified epoxy resin

The urethane-modified epoxy resin is an epoxy resin which has equal to or more than 2 epoxy groups and a skeleton of which is polyurethane.

The polyurethane that forms the skeleton is not particularly restricted as long as it is a polymer having a plurality of urethane bonds and/or urea bonds.

From the viewpoint that the effect of the present invention is superior, an epoxy equivalent of the urethane-modified epoxy resin is preferably equal to or more than 200 g/eq and equal to or less than 500 g/eq.

### ·Content of toughening agent (D)

When the composition of the present invention further includes the toughening agent (D), a content of the toughening agent (D) (in the case of equal to or more than 2 toughening agents (D), the content refers to the total content of the equal to or more than 2 toughening agents (D)) is preferably 1 to 30 parts by mass, more preferably 5 to 20 parts by mass, based on 100 parts by mass of the epoxy resin (AA). In each of the case of less than 1 part by mass and the case of more than 30 parts by mass, the toughening effect is hard to emerge, and heat resistance is deteriorated.

### (Additives)

The composition of the present invention can further include various additives when needed as long as the effect of the present invention is exerted. Examples of the additives include a filler, a reaction retarder, an anti-aging agent, an antioxidant, a pigment, a dye, a plasticizer, a silane coupling agent, a thixotropic agent, a tackifier, a flame retardant, an antistatic agent, an ultraviolet light absorber, a surfactant, a dispersant, a dehydrating agent, and a solvent.

### ·Solvent

Examples of the solvent include ketone-based solvents, such as acetone, methyl ethyl ketone (MEK), and cyclohexanone; ester-based solvents, such as ethyl acetate and butyl acetate; aliphatic solvents, such as n-hexane; alicyclic solvents, such as cyclohexane; and aromatic solvents, such as toluene, xylene, and cellosolve acetate.

An amount of the solvent is preferably 80 to 300 parts by mass based on 100 parts by mass of the epoxy resin (AA). In the case of less than 80 parts by mass, the composition is thickened to make uniform coating difficult, and in the case of more than 300 parts by mass, it is difficult to coat the steel sheet surface with good accuracy of adhesive layer thickness.

The method for manufacturing the composition of the present invention is not particularly restricted, and for example, the composition can be obtained by mixing the above-mentioned epoxy resin (A), phenoxy resin (B) and amine-based latent curing agent(C), and another epoxy compound, the toughening agent (D), and various additives, which can be used as needed, using a stirring machine such as a mixer.

The composition of the present invention can be used as an adhesive composition that is used for laminating an electromagnetic steel sheet.

The composition of the present invention can be cured under the conditions of, for example, 140 to 250°C. The curing temperature is preferably equal to or higher than a temperature at which the amine-based latent curing agent (C) is activated. During the curing, application of pressure may be carried out.

After curing, the composition of the present invention becomes the above-mentioned "adhesive cured product obtained from the composition of the present invention" or an adhesive layer of an iron core formed of the composition of the present invention described later.

### <Glass transition temperature of adhesive cured product>

In the present invention, a glass transition temperature of the adhesive cured product (or the adhesive layer; the same shall apply hereinafter) obtained from the composition of the present invention, in differential scanning calorimetry, exceeds 160°C.

When the glass transition temperature of the adhesive cured product exceeds 160°C, the composition of the present invention is excellent in toughness even at high temperatures.

From the viewpoint that the effect of the present invention is superior, the glass transition temperature of the adhesive cured product is preferably equal to or higher than 180°C, more preferably 200 to 280°C.

### ·Method for measuring glass transition temperature of adhesive cured product

Regarding the glass transition temperature of the adhesive cured product, a DSC curve in a temperature range of 50°C to 370°C was measured by increasing the temperature up to 370°C at a temperature increase rate of 15°C/min using a differential scanning calorimeter DSC-50 manufactured by SHIMADZU CORPORATION.

In the present invention, a temperature at the first inflection point of the DSC curve was basically regarded as the glass transition temperature of the adhesive cured product (adhesive layer).

When the adhesive cured product had a phase structure such as a sea-island structure or a co-continuous phase structure and the DSC curve showed glass transition temperatures of a plurality of resins that formed the above phase structure, a glass transition temperature of a resin whose content in the adhesive cured product was higher or a glass transition temperature of a matrix resin (not domain) was regarded as the glass transition temperature of the adhesive cured product (adhesive layer).

In the present invention, the content of the epoxy resin (AA) is higher than that of the phenoxy resin (B), and hence, in the resulting adhesive cured product, the content of a cured product of the epoxy resin (AA) and the amine-based latent curing agent (C) is higher than that of the phenoxy resin (B) and can become dominant.

### <Yield stress at 25°C ≥ 60 MPa>

From the viewpoint that the effect (particularly toughness) of the present invention is superior and that the iron core is not easily broken or deformed even if the iron core is subjected to high-speed rotation, a yield stress of the adhesive cured product obtained by curing the composition of the present invention, as measured under the conditions of 25°C, is preferably equal to or more than 60 MPa, more preferably 80 to 200 MPa.

### <Yield stress at 140°C ≥ 20 MPa>

From the viewpoint that the effect (particularly toughness) of the present invention is superior and that the iron core is not easily broken or deformed even if the iron core is subjected to high-speed rotation under the high temperature conditions, a yield stress of the adhesive cured product obtained by curing the composition of the present invention, as measured under the conditions of 140°C, is preferably equal to or more than 20 MPa, more preferably equal to or more than 35 MPa.

It has been conventionally said that the temperature of a rotor with embedded permanent magnets during continuous rotation increases up to about 140°C when cooling with an engine oil or the like is not carried out (Reference: HIRANO Satoru, "Denki jidosha yo mota kozo wo mogisita kaiten nijuento nai no netsuryudo tokusei (in Japanese) (Thermo-Fluid Characteristics in Rotating Coaxial Cylinders Simulating an Electric Vehicle Motor Geometry)", p. 9, 2013, Dissertation 12102 Kou No. 6725 in Graduate School of University of Tsukuba). Therefore, it is thought that when the yield stress of the adhesive cured product, as measured under the conditions of 140°C, is equal to or more than 20 MPa, strength (toughness) of the adhesive cured product can be sufficiently maintained under the high temperature conditions even if cooling with an engine oil or the like is not carried out, and that when the composition of the present invention is applied to a laminated core (iron core), deformation or breakage of the laminated core during high-speed rotation can be suppressed.

The adhesive cured product preferably has a yield stress equal to or more than 60 MPa, as measured under the conditions of 25°C in accordance with JIS K 7161, and a yield stress equal to or more than 20 MPa, as measured under the conditions of 140°C in accordance with the same; and more preferably has a yield stress equal to or more than 85 MPa, as measured under the conditions of 25°C in accordance with the same, and a yield stress equal to or more than 35 MPa, as measured under the conditions of 140°C in accordance with the same.

In the present invention, the yield stress (tensile yield stress) of an adhesive cured product obtained by curing the composition of the present invention, at 25°C is measured under the conditions of 25°C in accordance with JIS K 7161:2014. The yield stress of the adhesive cured product at 140°C is measured under the conditions of 140°C in accordance with JIS K 7161:2014.

### [Iron core]

The iron core formed of the composition of the present invention is an iron core in which an electromagnetic steel sheet and an adhesive layer are alternately laminated, and the adhesive layer is formed of the adhesive composition for laminating an electromagnetic steel sheet according to the present invention.

When the adhesive layer is formed of the composition of the present invention, this iron core favorable for the present invention has excellent adhesive performance and is excellent in toughness over a wide temperature range. On this account, it is thought that this iron core is not easily broken or deformed even if it is subjected to high-speed rotation under the wide temperature conditions including high temperatures.

The adhesive composition for laminating an electromagnetic steel sheet, which is used for this iron core, is not particularly restricted as long as it is the adhesive composition for laminating an electromagnetic steel sheet according to the present invention (referred to as a "composition" simply in an iron core formed of the composition of the present invention).

Besides, the electromagnetic steel sheet that is used in the iron core formed of the composition of the present invention is not particularly restricted. For example, a conventionally known one can be mentioned.

The adhesive layer preferably has a yield stress equal to or more than 60 MPa, as measured under the conditions of 25°C in accordance with JIS K 7161, and has a yield stress equal to or more than 20 MPa, as measured under the conditions of 140°C in accordance with the same.

The above yield stresses of the adhesive layer in the iron core formed of the composition of the present invention are the same as yield stresses of the above-mentioned adhesive cured product obtained by curing the composition of the present invention.

### (Adhesive force to electromagnetic steel sheet)

Regarding adhesive force of the adhesive of the present invention to an electromagnetic steel sheet, shear strength at 25°C and/or 140°C in accordance with JIS K 6850 is preferably equal to or more than 7.0 MPa.

### (Manufacturing method)

The manufacturing method for an iron core formed of the composition of the present invention is not particularly restricted as long as it uses the composition of the present invention. The manufacturing method is, for example, a manufacturing method having:
a coating step of coating an electromagnetic steel sheet with the composition,
a punching step of punching out the electromagnetic steel sheet obtained in the coating step,
a laminating step of laminating punched electromagnetic steel sheets after the punching step, and
a curing step of heating a laminate obtained in the laminating step to integrate the laminate.

### ·Coating step

The coating step is a step of coating an electromagnetic steel sheet with the composition of the present invention.

The method for coating the electromagnetic steel sheet with the composition is not particularly restricted. Examples of the method include a roll coating method, a gravure coating method, an air doctor coating method, a blade coating method, a knife coating method, a rod coating method, a kiss coating method, a bead coating method, a cast coating method, a rotary screen method, a slot orifice coating method, a spray coating method, an inkjet method, a spin coating method, and an electrodeposition coating method.

In the coating step, at least one surface of the electromagnetic steel sheet is coated with the composition.

### ·Thickness of composition after coating

After the coating step, the thickness of the composition after the composition is applied and dried is preferably 1 to 20 µm, particularly preferably 2 to 10 µm, taking into consideration unevenness of the electromagnetic steel sheet, ease of pressure bonding the electromagnetic steel sheets, and the like.

### ·Drying step

When the composition that is used in an iron core formed of the composition of the present invention contains a solvent, it is preferable to provide a drying step of removing the solvent from the composition after coating. After the drying step (after the coating step unless the drying step is provided), a composite material in which the composition of the present invention has been applied to the electromagnetic steel sheet can be obtained.

Examples of a drying method in the drying step include hot air drying, induction heating, and vacuum heating.

It is preferable to carry out drying until the composition on the electromagnetic steel sheet reaches a non-sticky state (so-called tack-free) through the drying.

The temperature in the drying step is not particularly limited. However, if the reaction of the epoxy resin proceeds excessively, adhesion during curing becomes insufficient, but on the other hand, if the reaction does not proceed at all, tack occurs depending on the formulation of the epoxy resin, and a problem of blocking between steel sheets arises. In order to increase productivity in the coating and the drying steps, it is preferable to carry out drying at a relatively high temperature for a short time. Specifically, drying is preferably carried out at equal to or higher than 150°C for a few seconds to a few tens of seconds.

The composite material obtained as described above may be stored in a state where the composite material is wound in a roll shape or a coil shape, or in a state where the composite material is folded up. The adhesive layer of the composite material is excellent in tack-free properties, and therefore, when a folded composite material is unfolded for use, the adhesive layer does not peel off from the composite material.

### ·Punching step

The punching step is a step of punching out the composite material. Examples of the method for punching out the composite material include shearing work. The shape of the composite material punched out is not particularly restricted.

### ·Laminating step

The laminating step is a step of laminating the composite materials punched out in the punching step.

The number of the composite materials used for laminating is not particularly restricted.

The composite materials are laminated in such a manner that the electromagnetic steel sheet and the composition are alternately laminated.

### ·Curing step

The curing step is a step of heating a laminate obtained in the laminating step to integrate the laminate.

The heating temperature in the curing step is preferably 130 to 300°C.

When pressure is applied in the curing step, the pressure applied is preferably 0.1 to 10 MPa.

In the curing step, methods for heating and applying pressure are not particularly restricted.

After the curing step, an iron core formed of the composition of the present invention can be obtained.

### EXAMPLES

Hereinafter, the present invention will be described with examples. The present invention is not limited to the examples.

### [Electromagnetic steel sheet]

A non-oriented electromagnetic steel sheet having a yield strength of 200 to 550 MPa and a sheet thickness of 0.15 mm was used.

### [Adhesive composition for laminating electromagnetic steel sheet]

Components of Table 1 described below were used in the formulations (part(s) by mass) shown in the same table, and these were mixed under the conditions of 25°C to manufacture compositions.

The amounts of the phenoxy resin (B) and YP-50 shown in Table 1 are each a net amount of the phenoxy resin. The amount of the toughening agent (D) is a net amount of the toughening agent.

Details of the components shown in Table 1 are as follows.

### (Equal to or higher than tri-functional epoxy resin (A)) (Solid epoxy resin)

·Phenol novolac type epoxy resin: phenol novolac type epoxy resin having 7 epoxy groups in one molecule, epoxy equivalent 190 g/eq, trade name EPPN-201, manufactured by Nippon Kayaku Co., Ltd., softening temperature 65 to 78°C, solid at room temperature (25°C)
·Cresol novolac type epoxy resin: cresol novolac type epoxy resin having 3 to 10 epoxy groups in one molecule, epoxy equivalent 209 g/eq, trade name YDCN-704A, manufactured by NIPPON STEEL Chemical & material Co., Ltd., softening temperature 87 to 93°C, solid at room temperature (25°C)

### (Nitrogen-containing epoxy resin)

·Nitrogen-containing epoxy resin (1): trifunctional epoxy resin represented by the following formula (1), epoxy equivalent 97 g/eq, trade name EP-3950E, manufactured by ADEKA CORPORATION, liquid at room temperature (25°C) 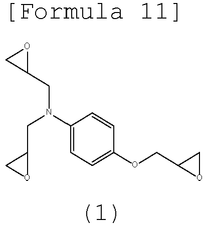
·Nitrogen-containing epoxy resin (2): tetrafunctional epoxy resin represented by the following formula (2), epoxy equivalent 110 g/eq, trade name YH404, manufactured by NIPPON STEEL Chemical & material Co., Ltd., liquid at room temperature (25°C)

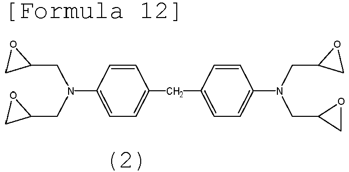

### (Epoxy resin other than epoxy resin (A))

·Bisphenol A type epoxy resin: bisphenol A type epoxy resin, bifunctional, molecular weight 380, epoxy equivalent 190±5 g/eq, Epikote 828, manufactured by Mitsubishi Chemical Corporation, liquid at room temperature (25°C)

### (Phenoxy resin (B) having Tg exceeding 120°C)

·YPS-007: phenoxy resin having bisphenol S skeleton, manufactured by NIPPON STEEL Chemical & material Co., Ltd.; Tg in uncured state exceeds 120°C; Mw equal to or more than 40,000 and equal to or less than 100,000
·ERF-001: phosphorus-containing phenoxy resin, manufactured by NIPPON STEEL Chemical & material Co., Ltd.; Tg in uncured state exceeds 120°C; Mw equal to or more than 40,000 and equal to or less than 100,000
·F-Resin: fluorene-containing phenoxy resin prepared in the following manner; Tg in uncured state exceeds 120°C; Mw equal to or more than 40,000 and equal to or less than 100,000

### ··Preparation of F-Resin

In a cyclohexanone/toluene mixed solvent, 1.02 mol of bisphenol A type glycidyl ether and 1.0 mol of 9,9-bis(4-hydroxyphenyl)fluorene (following structure) were allowed to react with each other in the presence of a catalytic amount of 2-ethyl-4-methylimidazole (manufactured by SHIKOKU CHEMICALS CORPORATION, 2E4MZ) at a temperature of 150°C to 170°C for 8 hours, and thereafter, a solution containing a fluorene-containing phenoxy resin with a solid content of 40% by mass was obtained.

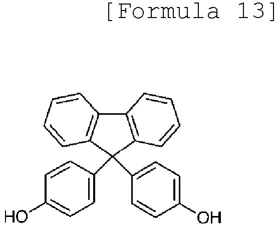

The fluorene-containing phenoxy resin obtained is referred to as "F-Resin". The structure of F-Resin is represented by the following formula (B2-2).

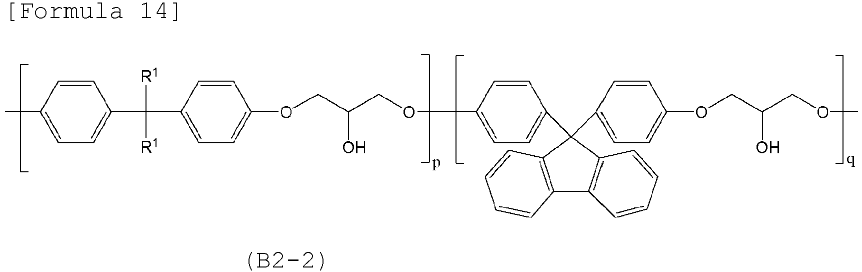

In the formula (B2-2), R¹ each represents a methyl group, p and q are each independently equal to or more than 1, and p+q is a value corresponding to the above weight-average molecular weight.
·(Comparison) YP-50: bisphenol A type phenoxy resin having Tg of 84°C, trade name YP-50, manufactured by NIPPON STEEL Chemical & material Co., Ltd., Tg 84°C, Mw 60,000 to 70,000 (catalog value)

### (Toughening agent (D))

·Kane Ace MX-154 (core-shell type toughening agent (D1)): mixture containing core-shell type rubber particles in a proportion of 33% by mass; core-shell type rubber particles function as a toughening agent; trade name Kane Ace MX-154, manufactured by KANEKA CORPORATION; a value shown in the column of Kane Ace MX-154 is a net amount of core-shell type rubber particles in Kane Ace MX-154; average particle diameter 0.1 µm
·EPR-21 (rubber-modified epoxy): rubber-modified epoxy resin, trade name EPR-21, manufactured by ADEKA CORPORATION, epoxy equivalent 200 g/eq

### (Amine-based latent curing agent (C))

·Dicyandiamide: EH-3636AS manufactured by ADEKA CORPORATION
·DCMU: 3-(3,4-dichlorophenyl)-1,1-dimethylurea, manufactured by Hodogaya UPL Co., Ltd.
·DDS: 4,4'-diaminodiphenyl sulfone, manufactured by Wakayama Seika Kogyo Co., Ltd.

### (Solvent)

### ·Cyclohexanone

### (Evaluation of adhesive cured product)

### ·Measurement of glass transition temperature (Tg)

Each composition manufactured as above was cast on a release film in such a manner that the thickness became 200 µm, and it was cured in an oven at 150°C for 1 hour. Using the resulting adhesive cured product, differential scanning calorimetry (DMC measurement, temperature increase rate 10°C/min) was carried out to measure a glass transition temperature of the adhesive cured product.

The results are set forth in the column "Glass transition temperature of adhesive cured product" of Table 1.

### ·Evaluation criteria

In the present invention, Tg of the adhesive cured product exceeds 160°C.

### (Evaluation of adhesive cured product: toughness)

A tensile specimen of each composition manufactured as above was prepared by the following method in accordance with JIS K 7161 (2014).

### ·Preparation of tensile specimen

Using each composition manufactured as above, a tensile specimen was prepared in accordance with JIS K 7161 (2014). First, each composition manufactured as above was cast on a release film in such a manner that the thickness became 100 µm, and thereafter, vacuum defoaming was carried out for 3 days. Next, the film obtained was cured in an oven at 150°C for 1 hour. The resulting adhesive cured product was punched out into a Type 1 dumbbell shape to prepare a tensile specimen.

### ·Tensile test

Using each tensile specimen prepared as above, a yield stress of the adhesive cured product (adhesive layer) obtained from the composition of the present invention was measured by a universal testing machine 5966 model with a constant temperature bath (manufactured by Instron Corporation) under the conditions of 25°C or 140°C and 50%RH ± 5%RH in accordance with JIS K 7161:2014. Yield stresses of 5 tensile specimens for each cured product were measured under the conditions of a tensile rate of 5 mm/min, a gauge length of 20 mm (using a contact extensometer), and a distance between chucks of 40 mm, and an average value of them was calculated.

Yield stresses (average values) under the conditions of 25°C are set forth in the column "Toughness at room temperature (stress/MPa@25°C)" of Table 1.

Yield stresses (average values) under the conditions of 140°C are set forth in the column "Toughness at high temperature (stress/MPa@140°C)" of Table 1.

### ·Evaluation criteria for toughness

In the case where the yield stress at 25°C (evaluation of toughness at room temperature) was equal to or more than 60 MPa, and the yield stress at 140°C (evaluation of toughness at high temperature) was equal to or more than 20 MPa, toughness was evaluated as good not only under the conditions of room temperature but also under the conditions of high temperatures.

In the case where the yield stress at 25°C was less than 60 MPa, or the yield stress at 140°C was less than 20 MPa, toughness was evaluated as poor.

### (Tack-free properties of composition after drying)

### ·Evaluation method for tack-free properties

Each composition manufactured as above was cast on an electromagnetic steel sheet in a thickness of 20 µm, and it was held in an oven under the conditions of 130°C for 30 minutes to dry the solvent in each composition.

The results are set forth in the column "Tack-free properties after drying" of Table **1.**

### ·Evaluation criteria for tack-free properties

In the case where the composition after drying did not feel sticky when touched with finger, tack-free properties were evaluated as very good, and this is indicated by circle symbol (o).

In the case where the composition after drying felt sticky when touched with finger, but when the finger was pressed against the composition after drying and then released, the composition after drying did not peel off from the electromagnetic steel sheet, tack-free properties were evaluated as fair, and this is indicated by triangle symbol (Δ).

In the case where the composition after drying felt sticky when touched with finger, and when the finger was pressed against the composition after drying and then released, the composition after drying peeled off from the electromagnetic steel sheet, tack-free properties were evaluated as poor, and this is indicated by cross symbol (x).

### (Evaluation of adhesive composition: shear strength)

### ·Shear strength (initial stage)

Two electromagnetic steel sheets were prepared, and on one of the electromagnetic steel sheets, each composition manufactured as above was cast in a thickness of 6 µm, and it was held in an oven at 130°C for 10 minutes to dry the solvent in each composition.

On the composition after drying that was on the electromagnetic steel sheet, the other electromagnetic steel sheet was laminated to prepare a laminate, and the laminate was cured in an oven at 160°C for 1 hour to obtain a specimen.

Using the specimen, an initial shear strength was measured under the conditions of 140°C in accordance with JIS K 6850. The results are set forth in the column "Shear strength (initial stage)/MPa@140°C" of Table 1.

### ·Shear strength (40°C 6 months)

Two electromagnetic steel sheets were prepared, and on one of the electromagnetic steel sheets, each composition manufactured as above was cast in a thickness of 6 µm, and it was held in an oven at 130°C for 10 minutes to dry the solvent in each composition. Thereafter, the electromagnetic steel sheet having the composition after drying was stored in an oven at 40°C for 6 months.

On the composition that was on the electromagnetic steel sheet after storage for 6 months, the other electromagnetic steel sheet was laminated to prepare a laminate, and the laminate was cured in an oven at 150°C for 1 hour to obtain a specimen.

Using the specimen, a shear strength was measured under the conditions of 140°C in accordance with JIS K 6850. The results are set forth in the column "Shear strength (40°C 6 months)/MPa@140°C" of Table 1.

### ·Evaluation criteria for decrease of adhesive strength after long-term storage

In the case where the initial shear strength and the shear strength after storage for 6 months were each equal to or more than 7.0 MPa, a decrease of adhesive strength after long-term storage was evaluated as having been able to be suppressed.

In the case where the initial shear strength was equal to or more than 7.0 Mpa, but the shear strength after storage for 6 months was less than 7.0 Mpa, a decrease of adhesive strength after long-term storage was evaluated as having been unable to be suppressed.

In the case where the initial shear strength was less than 7.0 Mpa, an adhesive strength under the high temperature conditions was evaluated as originally low.

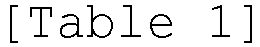

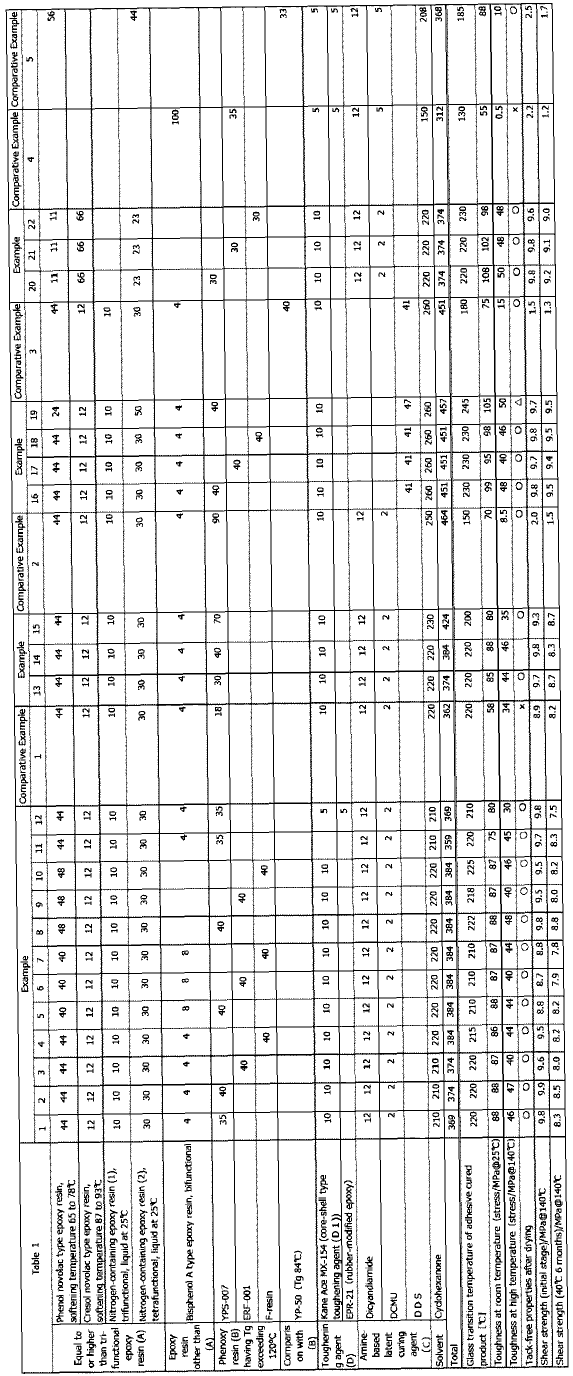

As shown by the results of Table 1, in Comparative Example 1 in which the content of the phenoxy resin (B) was lower than the predetermined range, the toughness under the room temperature conditions was poor, and the tack-free properties were poor.

In Comparative Example 2 in which the content of the phenoxy resin (B) was higher than the predetermined range, the glass transition temperature of the resulting adhesive cured product was low, the toughness under the high temperature conditions was poor, and the adhesive strength was low both before and after long-term storage.

In Comparative Examples 3 and 5 in which the phenoxy resin (B) was not contained, but a phenoxy resin having a glass transition temperature equal to or lower than 120°C in an uncured state was contained instead, the glass transition temperature of the resulting adhesive cured product was not low, but the toughness under the high temperature conditions markedly decreased, and the adhesive strength under the high temperature conditions was low both before and after long-term storage.

In Comparative Example 4 in which the predetermined epoxy resin (A) was not contained, but a bifunctional epoxy resin was contained instead, the glass transition temperature of the resulting adhesive cured product was low, the toughness was poor not only under the room temperature conditions but also under the high temperature conditions, the tack-free properties were poor, and the adhesive strength was low both before and after long-term storage.

On the other hand, the composition of the present invention had excellent tack-free properties before preparation of a laminated electromagnetic steel sheet and exhibited excellent adhesive performance even after long-term storage, and the resulting adhesive cured product had excellent toughness over a wide temperature range.

From the above results, it is thought that an iron core formed of the composition of the present invention is not easily broken or deformed even if it is subjected to high-speed rotation under the wide temperature conditions including high temperatures, because the iron core formed of the present invention has an adhesive layer formed of the composition of the present composition, and the adhesive layer is excellent in adhesive performance and toughness over a wide temperature range.

This application claims a priority of Japanese Patent Application No. 2021-102360 filed on June 21, 2021.

## Claims

1. An adhesive composition for laminating an electromagnetic steel sheet, comprising:
an epoxy resin (AA) containing an epoxy resin (A) having equal to or more than 3 epoxy groups in one molecule,
a phenoxy resin (B) having a glass transition temperature exceeding 120°C in an uncured state in differential scanning calorimetry, and
an amine-based latent curing agent (C), wherein:
the epoxy resin (A) contains an epoxy resin having a softening temperature equal to or higher than 60°C, measured as described in the specification,
a content of the phenoxy resin (B) is 20 to 80 parts by mass based on 100 parts by mass of the epoxy resin (AA), and
a glass transition temperature of the resulting adhesive cured product in differential scanning calorimetry exceeds 160°C.

2. The adhesive composition for laminating an electromagnetic steel sheet according to claim 1, wherein the phenoxy resin (B) contains at least one selected from the group consisting of a phosphorus-containing phenoxy resin (B1), a fluorene-containing phenoxy resin (B2), and a bisphenol S skeleton-containing phenoxy resin (B3).

3. The adhesive composition for laminating an electromagnetic steel sheet according to claim 1 or 2, wherein the epoxy resin having a softening temperature equal to or higher than 60°C contains a phenol novolac type epoxy resin (A1) and/or a cresol novolac type epoxy resin (A2).

4. The adhesive composition for laminating an electromagnetic steel sheet according to any one of claims 1 to 3, wherein a content of the epoxy resin having a softening temperature equal to or higher than 60°C is equal to or more than 50% by mass in the whole amount of the epoxy resin (AA).

5. The adhesive composition for laminating an electromagnetic steel sheet according to any one of claims 1 to 4, wherein the epoxy resin (A) further contains an epoxy resin having an N,N-diglycidylamino group, and a content of the epoxy resin having an N,N-diglycidylamino group is equal to or less than 50% by mass in the whole amount of the epoxy resin (AA).

6. The adhesive composition for laminating an electromagnetic steel sheet according to claim 5, wherein the epoxy resin having an N,N-diglycidylamino group contains an epoxy resin (A3) represented by the following formula (1) and/or an epoxy resin (A4) represented by the following formula (2):

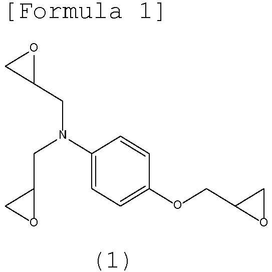

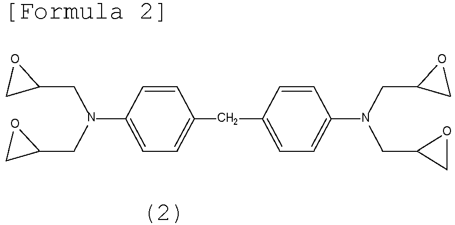

7. The adhesive composition for laminating an electromagnetic steel sheet according to any one of claims 1 to 6, wherein a content of the amine-based latent curing agent (C) is 5 to 70 parts by mass based on 100 parts by mass of the epoxy resin (AA).

8. The adhesive composition for laminating an electromagnetic steel sheet according to any one of claims 1 to 7, further comprising a toughening agent (D).

9. The adhesive composition for laminating an electromagnetic steel sheet according to claim 8, wherein the toughening agent (D) has an average particle diameter in terms of volume of 0.005 to 0.6 µm, measured as described in the specification, and contains a core-shell type toughening agent (D1).

10. The adhesive composition for laminating an electromagnetic steel sheet according to claim 8 or 9, wherein a content of the toughening agent (D) is 1 to 30 parts by mass based on 100 parts by mass of the epoxy resin (AA).

11. The adhesive composition for laminating an electromagnetic steel sheet according to any one of claims 1 to 10, wherein a content of a bifunctional epoxy resin is 0 to 40% by mass in the epoxy resin (AA).

12. The adhesive composition for laminating an electromagnetic steel sheet according to any one of claims 1 to 11, wherein the adhesive cured product has a yield stress equal to or more than 60 MPa, as measured under the conditions of 25°C in accordance with JIS K 7161, and has a yield stress equal to or more than 20 MPa, as measured under the conditions of 140°C in accordance with JIS K 7161.

## Patentansprüche

1. Klebstoffzusammensetzung zum Laminieren eines elektromagnetischen Stahlblechs, umfassend:
ein Epoxidharz (AA), das ein Epoxidharz (A) enthält, das gleich zu oder mehr als 3 Epoxidgruppen in einem Molekül aufweist,
ein Phenoxyharz (B), das eine Glasübergangstemperatur aufweist, die 120°C übersteigt, in einem ungehärteten Zustand in der dynamischen Differenzkalorimetrie, und
ein latentes Härtungsmittel auf Aminbasis (C), wobei:
das Epoxidharz (A) ein Epoxidharz enthält, das eine Erweichungstemperatur von gleich zu oder mehr als 60°C aufweist, gemessen wie in der Beschreibung beschrieben,
ein Gehalt des Phenoxyharzes (B) 20 bis 80 Masseteile, bezogen auf 100 Masseteile des Epoxidharzes (AA), ist, und
eine Glasübergangstemperatur des resultierenden gehärteten Klebstoffprodukts in der dynamischen Differenzkalorimetrie 160 °C übersteigt.

2. Klebstoffzusammensetzung zum Laminieren eines elektromagnetischen Stahlblechs nach Anspruch 1, wobei das Phenoxyharz (B) mindestens eines enthält, das aus der Gruppe ausgewählt ist, die aus einem phosphorhaltigen Phenoxyharz (B1), einem fluorhaltigen Phenoxyharz (B2) und einem Bisphenol-S-Grundgerüst-haltigen Phenoxyharz (B3) besteht.

3. Klebstoffzusammensetzung zum Laminieren eines elektromagnetischen Stahlblechs nach Anspruch 1 oder 2, wobei das Epoxidharz mit einer Erweichungstemperatur gleich zu oder höher als 60°C ein Epoxidharz vom Phenol-Novolak-Typ (A1) und/oder ein Epoxidharz vom Kresol-Novolak-Typ (A2) enthält.

4. Klebstoffzusammensetzung zum Laminieren eines elektromagnetischen Stahlblechs nach einem der Ansprüche 1 bis 3, wobei ein Gehalt des Epoxidharzes mit einer Erweichungstemperatur gleich zu oder höher als 60°C gleich zu oder mehr als 50 Masse-% in der Gesamtmenge des Epoxidharzes (AA) ist.

5. Klebstoffzusammensetzung zum Laminieren eines elektromagnetischen Stahlblechs nach einem der Ansprüche 1 bis 4, wobei das Epoxidharz (A) weiterhin ein Epoxidharz mit einer N,N-Diglycidylaminogruppe enthält und ein Gehalt des Epoxidharzes mit einer N,N-Diglycidylaminogruppe gleich zu oder weniger als 50 Masse-% der Gesamtmenge des Epoxidharzes (AA) ist.

6. Klebstoffzusammensetzung zum Laminieren eines elektromagnetischen Stahlblechs nach Anspruch 5, wobei das Epoxidharz mit einer N,N-Diglycidylaminogruppe ein Epoxidharz (A3), das durch die folgende Formel (1) dargestellt ist, und/oder ein Epoxidharz (A4), das durch die folgende Formel (2) dargestellt ist, enthält:

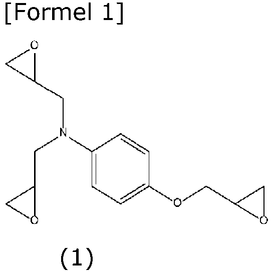

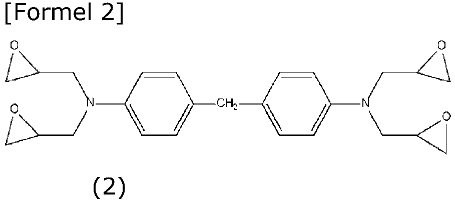

7. Klebstoffzusammensetzung zum Laminieren eines elektromagnetischen Stahlblechs nach einem der Ansprüche 1 bis 6, wobei ein Gehalt des latenten Härtungsmittels auf Aminbasis (C) 5 bis 70 Masseteile bezogen auf 100 Masseteile des Epoxidharzes (AA) ist.

8. Klebstoffzusammensetzung zum Laminieren eines elektromagnetischen Stahlblechs nach einem der Ansprüche 1 bis 7, ferner umfassend ein Schlagzähigkeitsverbesserer (D).

9. Klebstoffzusammensetzung zum Laminieren eines elektromagnetischen Stahlblechs nach Anspruch 8, wobei der Schlagzähigkeitsverbesserer (D) einen durchschnittlichen Teilchendurchmesser in Bezug auf das Volumen von 0,005 bis 0,6 µm hat, gemessen wie in der Beschreibung beschrieben, und einen Schlagzähigkeitsverbesserer (D1) vom Kern-Schale-Typ enthält.

10. Klebstoffzusammensetzung zum Laminieren eines elektromagnetischen Stahlblechs nach Anspruch 8 oder 9, wobei ein Gehalt des Schlagzähigkeitsverbesserers (D) 1 bis 30 Masseteile bezogen auf 100 Masseteile des Epoxidharzes (AA) ist.

11. Klebstoffzusammensetzung zum Laminieren eines elektromagnetischen Stahlblechs nach einem der Ansprüche 1 bis 10, wobei ein Gehalt eines bifunktionellen Epoxidharzes 0 bis 40 Masse-% in dem Epoxidharz (AA) ist.

12. Klebstoffzusammensetzung zum Laminieren eines elektromagnetischen Stahlblechs nach einem der Ansprüche 1 bis 11, wobei das gehärtete Klebstoffprodukt eine Streckspannung von gleich zu oder mehr als 60 MPa aufweist, gemessen unter den Bedingungen von 25°C gemäß JIS K 7161, und eine Streckspannung von gleich zu oder mehr als 20 MPa aufweist, gemessen unter den Bedingungen von 140°C gemäß JIS K 7161.

## Revendications

1. Composition adhésive pour stratifier une tôle d'acier électromagnétique, comprenant :
une résine époxy (AA) contenant une résine époxy (A) ayant égale ou supérieure à 3 groupes époxy dans une molécule,
une résine phénoxy (B) ayant une température de transition vitreuse supérieure à 120°C à l'état non durci en calorimétrie différentielle à balayage, et
un agent de durcissement latent à base d'amine (C), dans lequel :
la résine époxy (A) contient une résine époxy ayant une température de ramollissement égale ou supérieure à 60°C, mesurée comme décrit dans la description,
une teneur en résine phénoxy (B) est de 20 à 80 parties en masse sur la base de 100 parties en masse de la résine époxy (AA), et
une température de transition vitreuse du produit adhésif durci résultant en calorimétrie différentielle à balayage dépasse 160°C.

2. Composition adhésive pour stratifier une tôle d'acier électromagnétique selon la revendication 1, dans laquelle la résine phénoxy (B) contient au moins une choisie dans le groupe constitué par une résine phénoxy contenant du phosphore (B1), une résine phénoxy contenant du fluorène (B2) et une résine phénoxy contenant un squelette de bisphénol S (B3).

3. Composition adhésive pour stratifier une tôle d'acier électromagnétique selon la revendication 1 ou 2, dans laquelle la résine époxy ayant une température de ramollissement égale ou supérieure à 60°C contient une résine époxy de type novolaque phénol (A1) et/ou une résine époxy de type novolaque crésol (A2).

4. Composition adhésive pour stratifier une tôle d'acier électromagnétique selon l'une quelconque des revendications 1 à 3, dans laquelle une teneur en résine époxy ayant une température de ramollissement égale ou supérieure à 60°C est égale ou supérieure à 50 % en masse dans la quantité totale de résine époxy (AA).

5. Composition adhésive pour stratifier une tôle d'acier électromagnétique selon l'une quelconque des revendications 1 à 4, dans laquelle la résine époxy (A) contient en outre une résine époxy ayant un groupe N,N-diglycidylamino, et une teneur en résine époxy ayant un groupe N,N-diglycidylamino est égale ou inférieure à 50 % en masse dans la quantité totale de la résine époxy (AA).

6. Composition adhésive pour stratifier une tôle d'acier électromagnétique selon la revendication 5, dans laquelle la résine époxy ayant un groupe N,N-diglycidylamino contient une résine époxy (A3) représentée par la formule (1) suivante et/ou une résine époxy (A4) représentée par la formule (2) suivante :

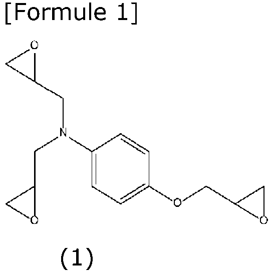

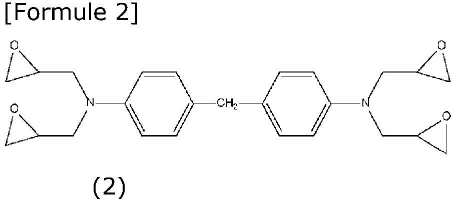

7. Composition adhésive pour stratifier une tôle d'acier électromagnétique selon l'une quelconque des revendications 1 à 6, dans laquelle une teneur en agent de durcissement latent à base d'amine (C) est de 5 à 70 parties en masse sur la base de 100 parties en masse de la résine époxy (AA).

8. Composition adhésive pour stratifier une tôle d'acier électromagnétique selon l'une quelconque des revendications 1 à 7, comprenant en outre un agent de renforcement (D).

9. Composition adhésive pour stratifier une tôle d'acier électromagnétique selon la revendication 8, dans laquelle l'agent de renforcement (D) a un diamètre particulaire moyen en termes de volume de 0,005 à 0,6 µm, mesuré comme décrit dans la description, et contient un agent de renforcement de type cœur-coquille (D1).

10. Composition adhésive pour stratifier une tôle d'acier électromagnétique selon la revendication 8 ou 9, dans laquelle une teneur en agent de renforcement (D) est de 1 à 30 parties en masse sur la base de 100 parties en masse de la résine époxy (AA).

11. Composition adhésive pour stratifier une tôle d'acier électromagnétique selon l'une quelconque des revendications 1 à 10, dans laquelle une teneur en résine époxy bifonctionnelle est de 0 à 40 % en masse dans la résine époxy (AA).

12. Composition adhésive pour stratifier une tôle d'acier électromagnétique selon l'une quelconque des revendications 1 à 11, dans laquelle le produit durci adhésif a une limite d'élasticité égale ou supérieure à 60 MPa, mesurée dans les conditions de 25°C conformément à JIS K 7161, et a une limite d'élasticité égale ou supérieure à 20 MPa, mesurée dans les conditions de 140°C conformément à JIS K 7161.
